# EUROPEAN PATENT SPECIFICATION

(11) **EP 1 928 624 B1**
(45) Date of publication and mention of the grant of the patent: **20.03.2013**
(21) Application number: 06801062.8
(22) Date of filing: 09.08.2006
(51) Int. Cl.: B22F 1/00, B22F 9/24, B01J 3/02, B01J 3/03, B01J 4/00, B01J 19/10, B01J 19/12, B01J 37/08, B01J 37/34, C22B 3/22, C22B 23/06

(54) **CONTINUOUS PRODUCTION OF NANO-SCALE METAL PARTICLES**
KONTINUIERLICHE HERSTELLUNG VON NANOSKALIGEN METALLTEILCHEN
PRODUCTION CONTINUE DE PARTICULES METALLIQUES DE DIMENSION NANOMETRIQUE

(30) Priority: 10.08.2005 US 201353; 10.08.2005 US 200668
(43) Date of publication of application: 11.06.2008
(73) Proprietor: Directa Plus S.p.A., 22074 Lomazzo (CO) (IT)
(72) Inventor: MERCURI, Robert A.,, Seven Hills, Ohio 44131 (US)
(74) Representative: Cremer & Cremer
(86) International application number: PCT/US2006/031080
(87) International publication number: WO 2007/021768

(56) References cited:
- RU-C1- 2 161 549
- US-A- 1 836 732
- US-A- 2 900 245
- US-A- 2 900 245
- US-A- 3 075 494
- US-A- 3 075 494
- US-A- 3 158 499
- US-A- 3 158 499
- US-A- 3 900 646
- US-A- 3 955 962
- US-A- 3 998 758
- HUH S H ET AL: "A design of a nanometer size metal particle generator: Thermal decomposition of metal carbonyls" REVIEW OF SCIENTIFIC INSTRUMENTS, AIP, MELVILLE, NY, US, vol. 70, no. 11, 1 November 1999 (1999-11-01), pages 4366-4369, XP012037195 ISSN: 0034-6748

## Description

### Technical Field

The present invention relates to the continuous production of nano-scale metal particles useful for catalysis and other applications. By the practice of the present invention, nano-scale metal particles can be produced and collected with greater speed, precision and flexibility than can be accomplished with conventional processing. Thus, the invention provides a practical and cost-effective system for preparing such nano-scale metal particles.

### Background Art

Catalysts are becoming ubiquitous in modem chemical processing. Catalysts are used in the production of materials such as fuels, lubricants, refrigerants, polymers, drugs, etc., as well as playing a role in water and air pollution mediation processes. Indeed, catalysts have been ascribed as having a role in fully one third of the material gross national product of the United States, as discussed by Alexis T. Bell in "The Impact of Nanoscience on Heterogeneous Catalysis" (Science, Vol. 299, pg. 1688, 14 March 2003).

Generally speaking, catalysts can be described as small particles deposited on high surface area solids. Traditionally, catalyst particles can range from the sub-micron up to tens of microns. One example described by Bell is the catalytic converter of automobiles, which consist of a honeycomb whose walls are coated with a thin coating of porous aluminum oxide (alumina). In the production of the internal components of catalytic converters, an aluminum oxide wash coat is impregnated with nanoparticles of a platinum group metal catalyst material. In fact, most industrial catalysts used today include platinum group metals especially platinum, rhodium and iridium or alkaline metals like cesium, at times in combination with other metals such as iron or nickel.

The small size of these particles has been recognized as extremely significant in their catalytic function. Indeed it is also noted by Bell that the performance of a catalyst can be greatly affected by the particle size of the catalyst particles, since properties such as surface structure and the electronic properties of the particles can change as the size of the catalyst particles changes.

In his study on nanotechnology of catalysis presented at the Frontiers in Nanotechnology Conference on May 13, 2003, Eric M. Stuve of the Department of Chemical Engineering of the University of Washington, described how the general belief is that the advantage of use of nano-sized particles in catalysis is due to the fact that the available surface area of small particles is greater than that of larger particles, thus increasing effectiveness by providing more metal atoms at the surface to optimize catalysis using such nano-sized catalyst materials. However, Stuve points out that the advantages of the use of nano-sized catalyst particles may be more than simply due to the size effect. Rather, the use of nanoparticles can exhibit modified electronic structure and a different shape with actual facets being present in the nanoparticles, which provide for interactions which can facilitate catalysis. Indeed, Cynthia Friend, in "Catalysis On Surfaces" (Scientific American, April 1993, p. 74), posits catalyst shape, and, more specifically, the orientation of atoms on the surface of the catalyst particles, as important in catalysis. In addition, differing mass transport resistances may also improve catalyst function. Thus, the production of nano-sized metal particles for use as catalysts on a more flexible and commercially efficacious platform is being sought. Moreover, other applications for nano-scale particles are being sought, whether for the platinum group metals traditionally used for catalysis or other metal particles.

Conventionally, however, catalysts are prepared in two ways. One such process involves catalyst materials being deposited on the surface of carrier particles such as carbon blacks or other like materials, with the catalyst-loaded particles then themselves being loaded on the surface at which catalysis is desired. One example of this is in the fuel cell arena, where carbon black or other like particles loaded with platinum group metal catalysts are then themselves loaded at the membrane/electrode interface to catalyze the breakdown of molecular hydrogen into its component protons and electrons, with the resulting electrons passed through a circuit as the current generated by the fuel cell. One major drawback to the preparation of catalyst materials through loading on a carrier particle is in the amount of time the loading reactions take, which can be measured in hours in some cases.

To wit, in U.S. Patent 6,716,525, Yadav and Pfaffenbach describe the dispersing of nano-scale powders on coarser carrier powders in order to provide catalyst materials. The carrier particles of Yadav and Pfaffenbach include oxides, carbides, nitrides, borides, chalcogenides, metals and alloys. The nanoparticles dispersed on the carriers can be any of many different materials according to Yadav and Pfaffenbach, including precious metals such as platinum group metals, rare earth metals, the so-called semi- metals, as well as non-metallic materials, and even clusters such as fullerenes, alloys and nanotubes.

Alternatively, the second common method for preparing catalyst materials involves directly loading catalyst metals such as platinum group metals on a support without the use of carrier particles which can interfere with the catalytic reaction. For example, many automotive catalytic converters, as discussed above, have catalyst particles directly loaded on the aluminum oxide honeycomb which forms the converter structure. The processes needed for direct deposition of catalytic metals on support structures, however, are generally operated at extremes of temperature and/or pressures. For instance one such process is chemical sputtering at temperatures in excess of 1,500°C and under conditions of high vacuum. Thus, these processes are difficult and expensive to operate and also operate in a line-of-sight manner, precluding full use of the support.

Thin films of catalyst metals are preferably produced on rough and porous materials applying thermal decomposition of metal carbonyls on surfaces which are heated above carbonyl decomposition temperature e.g. by Clyde US 3 998 758, Toulmin US 3 075 494 and Jenkin US 3 158 499.

Another interesting approach for the production elongated metallic fibers is disclosed in Dawihl et al. US 3 955 962. Metal carbonyls are thermally decomposed and fibers are grown from metal atoms on a supporting surface within a reactor along the field lines of an applied electric field.

In an attempt to provide nano-scale catalyst particles, Bert and Bianchini, in International Patent Application Publication No. WO 2004/036674, suggest a process using a templating resin to produce nano-scale particles for fuel cell applications. Even if technically feasible, however, the Bert and Bianchini methods require high temperatures (on the order of 300°C to 800°C), and require several hours. Accordingly, these processes are of limited value.

Taking a different approach, Sumit Bhaduri, in "Catalysis With Platinum Carbonyl Clusters," Current Science, Vol. 78, No. 11, 10 June 2000, asserts that platinum carbonyl clusters, by which is meant polynuclear metal carbonyl complexes with three or more metal atoms, have potential as redox catalysts, although the Bhaduri publication acknowledges that the behavior of such carbonyl clusters as redox catalysts is not understood in a comprehensive manner. Indeed, metal carbonyls have been recognized for use in catalysis in other applications.

Iron particles on micrometer size scale for applications as magnetic materials were produced in a circulating non-turbulent flow gas reactor by H. Beller in US 2 900 245.

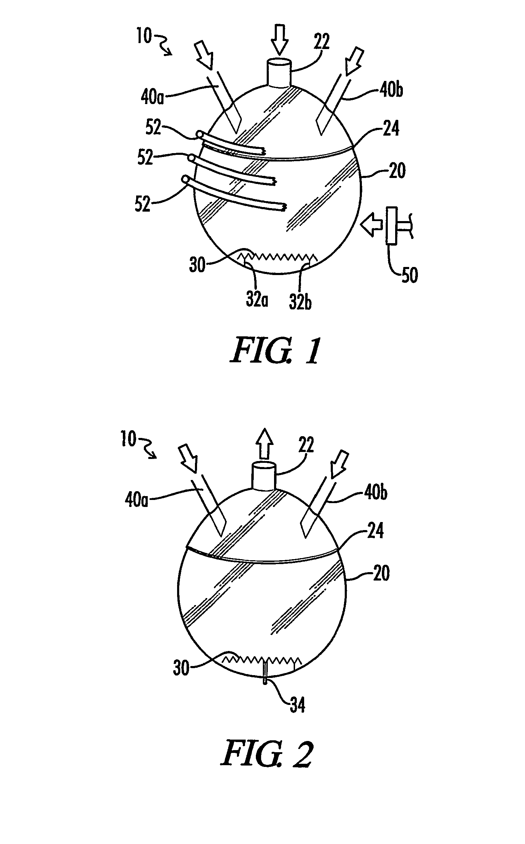

HUH, S.H. et al. describe in "A design of a nanometre size metal particle generator: Thermal decomposition of metal carbonyls", Review of Scientific Instruments, Vol. 70, No. 11, (1999), p. 4366-4369 a closed system reactor (Figure 1) for production of nanometer size metal particles of Fe, Mo and Fe/Mo alloy from carbonyls decomposed on a hot filament.

The process disclosed in RU 2 161 549 C1 is preferably used for the production of Ni-nanoparticles with controlled size in the range 0.5 µm to 5 µm, where size control is obtained mainly by means of temperature. This method uses thermal decomposition of Ni carbonyl diluted with the diluent gas carbon oxide provided through a second feeder. The carbonyl nickel powder was instead collected in the receiving bin of the decomposer.

Metal carbonyls have also been used as, for instance, anti-knock compounds in unleaded gasolines. However, more significant uses of metal carbonyls are in the production and/or deposition of the metals present in the carbonyl, since metal carbonyls are generally viewed as easily decomposed and volatile resulting in deposition of the metal and carbon monoxide.

Generally speaking, carbonyls are transition metals combined with carbon monoxide and have the general formula Mₓ(CO)_{y}, where M is a metal in the zero oxidation state and where x and y are both integers. While many consider metal carbonyls to be coordination compounds, the nature of the metal to carbon bond leads some to classify them as organometallic compounds. In any event, the metal carbonyls have been used to prepare high purity metals, although not for the production of nano-scale metal particles. As noted, metal carbonyls have also been found useful for their catalytic properties such as for the synthesis of organic chemicals in gasoline antiknock formulations.

Accordingly, what is needed is the continuous production of nano-scale metal particles for use as, e.g., catalyst materials. The desired system can be used for the preparation of nano-scale particles loaded on a carrier particle but, significantly, can also be used for the collection of nano-scale particles directly on a surface without the requirement for extremes in temperature and/or pressures.

### Disclosure of the Invention

A continuous system and process for the production of nano-scale metal particles as defined in claim 1b and 1 is presented. By nano-scale particles is meant particles having an average diameter of no greater than 1,000 nanometers (nm), e.g., no greater than one micron. More preferably, the particles produced by the inventive system have an average diameter no greater than 250 nm, most preferably no greater than 20 nm.

Preferably, the particles produced by the invention are roughly spherical or isotropic, meaning they have an aspect ratio of about 1.4 or less, although particles having a higher aspect ratio can also be prepared and used as catalyst materials. Aspect ratio refers to the ratio of the largest dimension of the particle to the smallest dimension of the particle (thus, a perfect sphere has an aspect ratio of 1.0). The diameter of a particle for the purposes of this invention is taken to be the average of all of the diameters of the particle, even in those cases where the aspect ratio of the particle is greater than 1.4.

In the practice of the present invention, a decomposable metal- containing moiety is fed into a reactor vessel and sufficient energy to decompose the moiety applied, such that the moiety decomposes and nano-scale metal particles are deposited on a support or collected in a collector. The decomposable moiety used in the invention can be any decomposable metal-containing material, including an organometallic compound, a metal complex or a metal coordination compound, provided that the moiety can be decomposed to provide free metals under the conditions existing in the reactor vessel, such that the free metal can be deposited on a support or collected by a collector. Examples of suitable moieties for use in the invention are metal carbonyls, such as nickel or iron carbonyls, or noble metal carbonyls.

The invention is advantageously practiced in an apparatus comprising a reactor vessel, a plurality of feeders for feeding or supplying the decomposable moiety into the reactor vessel, a collector which is operatively connected to the reactor vessel for collecting nano-scale metal particles produced on decomposition of the decomposable moiety, and a source of energy capable of decomposing the decomposable moiety. The source of energy should act on the decomposable moiety such that the moiety decomposes to provide nano-scale metal particles which are deposited on a support or collected by the collector.

The reactor vessel n be formed of any material which can withstand the conditions under which the decomposition of the moiety occurs. Generally, where the reactor vessel is a closed system which does not belong to the present invention, that is, where it is not an open ended vessel permitting reactants to flow into and out of the vessel, the vessel can be under subatmospheric pressure, by which is meant pressures as low as about 333 hPa (250 millimeters (mm)). Indeed, the use of subatmospheric pressures, as low as about 1.33 hPa (1 mm) of pressure, can accelerate decomposition of the decomposable moiety and provide smaller nano-scale particles. However, one advantage of the invention is the ability to produce nano-scale particles at generally atmospheric pressure, i.e., about 1013 hPa (760 mm). Alternatively, there may be advantage in cycling the pressure, such as from sub-atmospheric to generally atmospheric or above, to encourage nano- deposits within the structure of the support. Of course, even in a so-called "closed system," there needs to be a valve or like system for relieving pressure build-up caused, for instance, by the generation of carbon monoxide (CO) or other byproducts. Accordingly, the use of the expression "closed system" is meant to distinguish the system from a flow-through type of system as discussed hereinbelow.

When the reactor vessel is a "flow-through" reactor vessel, that is, a conduit through which the reactants flow while reacting, the flow of the reactants can be facilitated by drawing a partial vacuum on the conduit, although no lower than about 333 hPa (250 mm) is necessary in order to draw the reactants through the conduit towards the vacuum apparatus, or a flow of an inert gas such as argon or nitrogen can be pumped through the conduit to thus carry the reactants along the flow of the inert gas.

Indeed, the flow-through reactor vessel can be a fluidized bed reactor, where the reactants are borne through the reactor on a stream of a fluid. This type of reactor vessel may be especially useful where the nano-scale metal particles produced are intended to be loaded on support materials, like carbon blacks or the like, or where the metal particles are to be loaded on an ion exchange or similar resinous material.

The feeders supplying the decomposable moiety into the reactor vessel can be any feeder sufficient for the purpose, such as an injector which carries the decomposable moiety along with a jet of a gas such as an inert gas like argon or nitrogen, to thereby carry the decomposable moiety along the jet of gas through the injector nozzle and into the reactor vessel. The gas employed can be a reactant, like oxygen or ozone, rather than an inert gas. This type of feeder can be used whether the reactor vessel is a closed system or a flow-through reactor.

Supports useful in the practice of the invention can be any material on which the nano-scale metal particles produced from decomposition of the decomposable moieties can be deposited. In a preferred embodiment, the support is the material on which the catalyst metal is ultimately destined, such as the aluminum oxide honeycomb of a catalytic converter in order to deposit nano-scale particles on catalytic converter components without the need for extremes of temperature and pressure required by sputtering and like techniques. Alternatively, a collector capable of collecting nano-scale particles for re-use, such as a cyclonic or centrifugal collector, can be employed.

The support or collector can be disposed within the reactor vessel (indeed this is required in a closed system and is practical in a flow- through reactor) which does not belong to the invention. In the invention, in a flow-through reactor vessel, the flow of reactants can be directed at a support or collector positioned outside the vessel, at its terminus, especially where the flow through the flow-through reactor vessel is created by a flow of an inert gas. Alternatively, in a flow- through reactor, the flow of nano-scale metal particles produced by decomposition of the decomposable moiety can be directed into a centrifugal or cyclonic collector which collects the nano-scale particles in a suitable container for future use.

The energy employed to decompose the decomposable moiety can be any form of energy capable of accomplishing this function. For instance, electromagnetic energy such as infrared, visible, or ultraviolet light of the appropriate wavelengths can be employed. Additionally, microwave and/or radio wave energy, or other forms of sonic energy can also be employed (example, a spark to initiate "explosive" decomposition assuming suitable moiety and pressure), provided the decomposable moiety is decomposed by the energy employed. Thus, microwave energy, at a frequency of about 2.4 gigahertz (GHz) or induction energy, at a frequency which can range from as low as about 180 hertz (Hz) up to as high as about 13 mega Hz can be employed. A skilled artisan would readily be able to determine the form of energy useful for decomposing the different types of decomposable moieties which can be employed.

One preferred form of energy which can be employed to decompose the decomposable moiety is heat energy supplied by, e.g., heat lamps, radiant heat sources, or the like. Such heat can be especially useful for readily decomposable moieties, such as metal carbonyls. In such case, the temperatures needed are no greater than about 500°C, and generally not greater than about 250°C. Indeed, generally, temperatures no greater than about 200°C are needed to decompose the decomposable moiety and produce nano-scale metal particles therefrom.

Depending on the source of energy employed, the reactor vessel should be designed so as to not cause deposit of the nano-scale metal particles on the vessel itself (as opposed to the collector) as a result of the application of the source of energy. In other words, if the source of energy employed is heat, and the reactor vessel itself becomes heated to a temperature at or somewhat higher than the decomposition temperature of the decomposable moiety during the process of applying heat to the decomposable moiety to effect decomposition, then the decomposable moiety will decompose at the walls of the reactor vessel, thus coating the reactor vessel walls with nano-scale metal particles rather than collecting the nano-scale metal particles with the collector (one exception to this general rule occurs if the walls of the vessel are so hot that the decomposable carbonyl decomposes within the reactor vessel and not on the vessel walls, as discussed in more detail below).

One way to avoid this is to direct the energy directly at the collector. For instance, if heat is the energy applied for decomposition of the decomposable moiety, the collector can be equipped with a source of heat itself, such as a resistance heater in or at a surface of the collector such that the collector is at the temperature needed for decomposition of the decomposable moiety and the reactor vessel itself is not. Thus, decomposition occurs at the collector and deposition of nano-scale particles occurs principally at the collector. When the source of energy employed is other than heat, the source of energy can be chosen such that the energy couples with the collector, such as when microwave or induction energy is employed. In this instance, the reactor vessel should be formed of a material which is relatively transparent to the source of energy, especially as compared to the collector.

Similarly, in situations when collectors are disposed outside the reactor vessel when a flow-through reactor vessel is employed with a collector at its terminus (whether the collector is a solid substrate collector for depositing of nano-scale metal particles thereon or a cyclonic or like collector for collecting the nano-scale metal particles for a suitable container), the decomposition of the decomposable moiety occurs as the moiety is flowing through the flow-through collector and the reactor vessel should be transparent to the energy employed to decompose the decomposable moiety. Alternatively, whether or not the collector is inside the reactor vessel, or outside it, the reactor vessel can be maintained at a temperature below the temperature of decomposition of the decomposable moiety, where heat is the energy employed. One way in which the reactor vessel can be maintained below the decomposition temperatures of the moiety is through the use of a cooling medium like cooling coils or a cooling jacket. A cooling medium can maintain the walls of the reactor vessel below the decomposition temperatures of the decomposable moiety, yet permit heat to pass within the reactor vessel to heat the decomposable moiety and cause decomposition of the moiety and production of nano-scale metal particles.

In an alternative embodiment which is especially applicable where both the walls of the reactor vessel and the gases in the reactor vessel are generally equally susceptible to the heat energy applied (such as when both are relatively transparent), heating the walls of the reactor vessel, when the reactor vessel is a flow-through reactor vessel, to a temperature substantially higher than the decomposition temperature of the decomposable moiety can permit the reactor vessel walls to themselves act as the source of heat. In other words, the heat radiating from the reactor walls will heat the inner spaces of the reactor vessel to temperatures at least as high as the decomposition temperature of the decomposable moiety. Thus, the moiety decomposes before impacting the vessel walls, forming nano-scale particles which are then carried along with the gas flow within the reactor vessel, especially where the gas velocity is enhanced by a vacuum. This method of generating decomposition heat within the reactor vessel is also useful where the nano-scale particles formed from decomposition of the decomposable moiety are being attached to carrier materials (like carbon black) also being carried along with the flow within the reactor vessel. In order to heat the walls of the reactor vessel to a temperature sufficient to generate decomposition temperatures for the decomposable moiety within the reactor vessel, the walls of the reactor vessel are preferably heated to a temperature which is significantly higher than the temperature desired for decomposition of the decomposable moiety(ies) being fed into the reactor vessel, which can be the decomposition temperature of the decomposable moiety having the highest decomposition temperature of those being fed into the reactor vessel, or a temperature selected to achieve a desired decomposition rate for the moieties present. For instance, if the decomposable moiety having the highest decomposition temperature of those being fed into the reactor vessel is nickel carbonyl, having a decomposition temperature of about 50°C, then the walls of the reactor vessel should preferably be heated to a temperature such that the moiety would be heated to its decomposition temperature several (at least three) millimeters from the walls of the reactor vessel. The specific temperature is selected based on internal pressure, composition and type of moiety, but generally is not greater than about 250°C and is typically less than about 200°C to ensure that the internal spaces of the reactor vessel are heated to at least 50°C.

In any event, the reactor vessel, as well as the feeders, can be formed of any material which meets the requirements of temperature and pressure discussed above. Such materials include a metal, graphite, high density plastics or the like. Most preferably the reactor vessel and related components are formed of a transparent material, such as quartz or other forms of glass, including high temperature glass commercially available as Pyrex^{®} materials.

Thus, decomposable metal-containing moieties are fed into a reactor vessel where they are exposed to a source of energy sufficient to decompose the moieties and produce nano-scale metal particles. The decomposable moieties are fed into a closed-system reactor under vacuum or in the presence of an inert gas; similarly, the moieties are fed into a flow-through reactor where the flow is created by drawing a vacuum or flowing an inert gas through the flow- through reactor. The energy applied is sufficient to decompose the decomposable moiety in the reactor or as it as flowing through the reactor and free the metal from the moiety and thus create nano-scale metal particles which are collected on a support or in a collector. Where heat is the energy used to decompose the decomposable moiety, temperatures no greater than about 500°C, more preferably no greater than about 250°C, and most preferably no greater than about 200°C are required to produce nano-scale metal particles, which can then be directly deposited on the substrate for which they are ultimately intended without the use of carrier particles and in a process requiring only minutes and not under extreme conditions of temperature and pressure. Indeed, the process of the present invention often requires less than about one minute to produce nano-scale metal particles and, in some embodiments, can take less than about 5 seconds for the production of nano-scale metal particles.

In one embodimen not belonging to the present invention, a single feeder feeds a single decomposable moiety into the reactor vessel for formation of nano-scale metal particles. In the embodiment of the invention, however, a plurality of feeders each feeds decomposable moieties into the reactor vessel. In this way, all feeders can feed the same decomposable moiety or different feeders can feed different decomposable moieties, such as additional metal carbonyls, so as to provide nano-scale particles containing different metals such as platinum-nickel combinations or nickel-iron combinations as desired, in proportions determined by the amount of the decomposable moiety fed into the reactor vessel. For instance, by feeding different decomposable moieties through different feeders, one can produce a nano-scale particle having a core of a first metal, with domains of a second or third, etc. metal coated thereon. Indeed, altering the decomposable moiety fed into the reactor vessel by each feeder can alter the nature and/or constitution of the nano-scale particles produced. In other words, if different proportions of metals making up the nano-scale particles, or different orientations of the metals making up the nano-scale particles is desired, altering the decomposable moiety fed into the reactor vessel by each feeder can produce such different proportions or different orientations.

Indeed, in the case of the flow-through reactor vessel, each of the feeders can be arrayed about the circumference of the conduit forming the reactor vessel at approximately the same location, or the feeders can be arrayed along the length of the conduit so as to feed decomposable moieties into the reactor vessel at different locations along the flow path of the conduit to provide further control of the nano-scale particles produced.

While it is anticipated that the process may also produce particles that are larger than nano-scale in size along with the nano- scale particles desired, the larger particles can be separated from the sought- after nano-scale particles through the use of the cyclonic separator or because of their differing deposition rates on a collector.

Therefore it is an object of the present invention to provide a continuous process and apparatus for the production of nano-scale metal particles.

It is another object of the present invention to provide a continuous process and apparatus capable of producing nano-scale metal particles under conditions of temperature and/or pressure less extreme than conventional processes.

It is still another object of the present invention to provide a continuous process for preparing nano-scale metal particles which can be directly deposited on the end use substrate.

It is yet another object of the present invention to provide a continuous process for preparing nano-scale metal particles which can be collected for further use or treatment.

These objects and others which will be apparent to the skilled artisan upon reading the following description, can be achieved by continuously feeding at least one decomposable moiety selected from the group of organometallic compounds, metal complexes, metal coordination compounds, and mixtures thereof into a reactor vessel; exposing the decomposable moiety to a source of energy sufficient to decompose the moiety and produce nano-scale metal particles; and depositing or collecting the nano-scale metal particles. Preferably, the temperature within the reactor vessel is no greater than about 250°C. The pressure within the reactor vessel is preferably generally atmospheric, but pressures which vary between about 1.33 hPa (1 mm) to about 2666 hPa (2000 mm) can be employed.

The reactor vessel is advantageously formed of a material which is relatively transparent to the energy supplied by the source of energy, as compared to either the support on which the nano-scale metal particles are deposited or the collector on which the nano-scale metal particles are collected or the decomposable moieties, such as where the source of energy is radiant heat. In fact, the support or collector can have incorporated therein a resistance heater, or the source of energy can be a heat lamp. Where the source of energy is heat, the reactor vessel can be cooled, such as by a cooling medium like cooling coils or a cooling jacket disposed about the reactor vessel.

The support can be the end use substrate for the nano-scale metal particles produced within the reactor vessel, such as a component of an automotive catalytic converter or a fuel cell or electrolysis membrane or electrode. The support or collector can be positioned within the reactor vessel which does not form past of the present invention. However, the reactor vessel can be a flow-through reactor vessel comprising a conduit, in which case the support or collector can be disposed either external to the reactor vessel or within the reactor vessel.

It is to be understood that both the foregoing general description and the following detailed description present embodiments and are intended to provide an overview or framework for understanding the nature and character of the invention as it is claimed. The accompanying drawings are included to provide a further understanding of the invention. The drawings illustrate various embodiments, and together with the description serve to explain the principles and operations of the invention.
Fig. 1 is a side plan view of an apparatus for the production of nano-scale metal particles utilizing a "closed system" reactor vessel not in accordance with the present invention.
Fig. 2 is a side plan view of an alternate embodiment of the apparatus of Fig. 1.
Fig. 3 is a side plan view of an apparatus for the production of nano-scale metal particles utilizing a "flow-through" reactor vessel not in accordance with the present invention.
Fig. 4 is an alternative embodiment of the apparatus of Fig. 3.
Fig. 5 is an embodiment of the apparatus of Fig. 3, using a support external to the flow-through reactor vessel in accordance with the present invention.

### Best Mode For Carrying Out The Invention

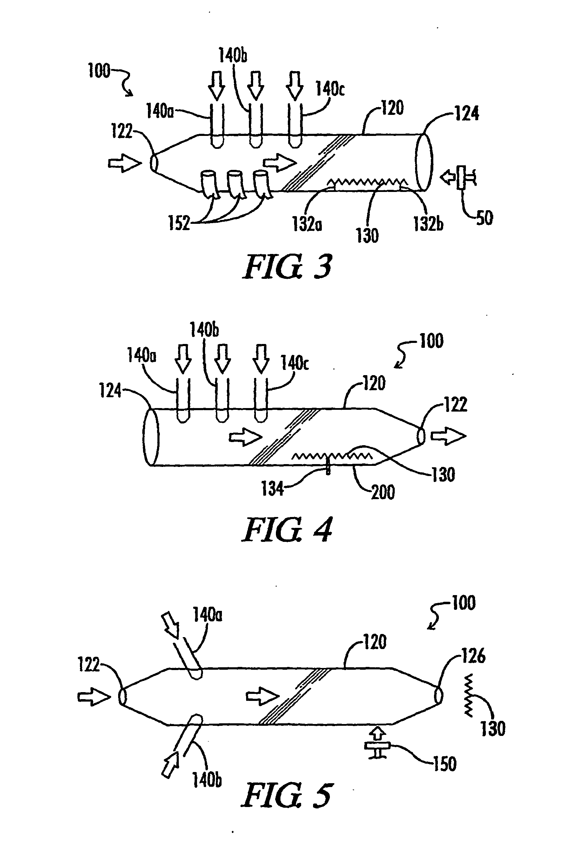

Referring now to the drawings, an apparatus in which the continuous process for the production of nano-scale metal particles can be practiced is generally designated by the numeral 10 or 100. In Figs. 1 and 2 apparatus 10 is a closed system comprising closed reactor vessel 20 whereas in Figs. 3-5 apparatus 100 is a flow-through reaction apparatus comprising flow-through reactor vessel 120.

It will be noted that Figs. 1-5 show apparatus 10, 100 in a certain orientation. However, it will be recognized that other orientations are equally applicable for apparatus 10, 100. For instance, when under vacuum, reactor vessel 20 can be in any orientation for effectiveness. Likewise, in flow-through reactor vessel 120, the flow of inert carrier gas and decomposable moieties or the flow of decomposable moieties as drawn by a vacuum in Figs. 3-5 can be in any particular direction or orientation and still be effective. In addition, the terms "up" "down" "right" and "left" as used herein refer to the orientation of apparatus 10, 100 shown in Figs. 1- 5.

Referring now to Figs. 1 and 2, as discussed above apparatus 10 comprises a closed-system reactor vessel 20 formed of any material suitable for the purpose and capable of withstanding the exigent conditions for the reaction to proceed inside including conditions of temperature and/or pressure. Reactor vessel 20 includes an access port 22 for providing an inert gas such as argon to fill the internal spaces of reactor vessel 20, the inert gas being provided by a conventional pump or the like (not shown). Similarly, as illustrated in Fig. 2, port 22 can be used to provide a vacuum in the internal spaces of reactor vessel 20 by using a vacuum pump or similar device (not shown). In order for the reaction to successfully proceed under vacuum in reactor vessel 20, it is not necessary that an extreme vacuum condition be created. Rather negative pressures no less than about 1.33 hPa (1 mm), preferably no less than about 333 hPa (250 mm), are all that are required.

Reactor vessel 20 has disposed therein a support 30 which can be attached directly to reactor vessel 20 or can be positioned on legs 32a and 32b within reactor vessel 20. Reactor vessel 20 also comprises a sealable opening shown at 24, in order to permit reactor vessel 20 to be opened after the reaction is completed to remove support 30 or remove nano-scale metal particles deposited on support 30. Closure 24 can be a threaded closure or a pressure closure or other types of closing systems, provided they are sufficiently air tight to maintain inert gas or the desired level of vacuum within reactor vessel 20.

Apparatus 10 further comprises at least one feeder 40, and preferably a plurality of feeders 40a and 40b, for feeding reactants, more specifically the decomposable moiety, into reactor vessel 20. As illustrated in Figs. 1 and 2, two feeders 40a and 40b are provided, although it is anticipated that other feeders can be employed depending on the nature of the decomposable moiety/moieties introduced into vessel 20 and/or end product nano-scale metal particles desired. Feeders 40a and 40b can be fed by suitable pumping apparatus for the decomposable moiety such as venturi pumps or the like (not shown).

As illustrated in Fig. 1, apparatus 10 further comprises a source of energy capable of causing decomposition of the decomposable moiety. In the embodiment illustrated in Fig. 1, the source of energy comprises a source of heat, such as a heat lamp 50, although other radiant heat sources can also be employed. In addition, as discussed above, the source of energy can be a source of electromagnetic energy, such as infrared, visible or ultraviolet light, microwave energy, radio waves or other forms of sonic energy, as would be familiar to the skilled artisan, provided the energy employed is capable of causing decomposition of the decomposable moiety.

In one embodiment, the source of energy can provide energy that is preferentially couple-able to support 30 so as to facilitate deposit of nano-scale metal particles produced by decomposition of the decomposable moiety on support 30. However, where a source of energy such as heat is employed, which would also heat reactor vessel 20, it may be desirable to cool reactor vessel 20 using, e.g., cooling tubes 52 (shown partially broken away) such that reactor vessel 20 is maintained at a temperature below the decomposition temperature of the decomposable moiety. In this way, the decomposable moiety does not decompose at the surfaces of reactor vessel 20 but rather on support 30.

In an alternative embodiment illustrated in Fig. 2, support 30 itself comprises the source of energy for decomposition of the decomposable moiety. For instance, a resistance heater powered by connection 34 can be incorporated into support 30 such that only support 30 is at the temperature of decomposition of the decomposable moiety, such that the decomposable moiety decomposes on support 30 and thus produces nano-scale metal particles deposited on support 30. Likewise, other forms of energy for decomposition of the decomposable moiety can be incorporated into support 30.

Support 30 can be formed of any material sufficient to have deposit thereon of nano-scale metal particles produced by decomposition of the decomposable moiety. In a preferred embodiment, support 30 comprises the end use substrate on which the nano-scale metal particles are intended to be employed, such as the aluminum oxide or other components of an automotive catalytic converter, or the electrode or membrane of a fuel cell or electrolysis cell. Indeed, where the source of energy is itself embedded in or associated with support 30, selective deposition of the catalytic nano-scale metal particles can be obtained to increase the efficiency of the catalytic reaction and reduce inefficiencies or wasted catalytic metal placement. In other words, the source of energy can be embedded within support 30 in the desired pattern for deposition of catalyst metal, such that deposition of the catalyst nano-scale metal can be placed where catalytic reaction is desired.

In another embodiment, as illustrated in Figs. 3-5, apparatus 100 comprises a flow-through reactor vessel 120 which includes a port, denoted 122, for either providing an inert gas or drawing a vacuum from reactor vessel 120 to thus create flow for the decomposable moieties to be reacted to produce nano-scale metal particles. In addition, apparatus 100 includes feeders 140a, 140b, 140c, which can be disposed about the circumference of reactor vessel 120, as shown in Fig. 3, or, in the alternative, sequentially along the length of reactor vessel 120, as shown in Fig. 4.

Apparatus 100 also comprises support 130 on which nano-scale metal particles are collected. Support 130 can be positioned on legs 132a and 132b or, in the event a source of energy is incorporated into support 130, as a resistance heater, the control and wiring for the source of energy in support 130 can be provided through line 134.

As illustrated in Figs. 3 and 4, when support 130 is disposed within flow-through reactor vessel 120, a port 124 is also provided for removal of support 130 or the nano-scale metal particles deposited thereon. In addition, port 124 should be structured such that it permits the inert gas fed through port 122 and flowing through reactor vessel 120 to egress reactor vessel 120 (as shown in Fig. 3). Port 124 can be sealed in the same manner as closure 24 discussed above with respect to closed system apparatus 10. In other words, port 124 can be sealed by a threaded closure or pressure closure or other types of closing structures as would be familiar to the skilled artisan.

As illustrated in Fig. 5, however, support 130 can be disposed external to reactor vessel 120 in flow-through reactor apparatus 100, and can also be a structural support 130 as illustrated in Fig. 5. In this embodiment, flow-through reactor vessel 120 comprises a port 124 through which are impinged on support 130 to thus deposit the nano-scale metal particles on support 130. In this way it is no longer necessary to gain access to reactor vessel 120 to collect either support 130 or the nano-scale metal particles deposited thereon. In addition, during the impingement to produce nano- scale metal particles on support 130, either port 126 or support 130 can be moved in order to provide for an impingement of the decomposable moiety to produce nano-scale metal particles on certain specific areas of support 130. This is especially useful if support 130 comprises the end use substrate for the nano-scale metal particles such as the component of a catalytic converter or electrode for fuel cells. Thus, the nano-scale metal particles are only deposited where desired and efficiency and decrease of wasted catalytic metal is facilitated.

As discussed above, reactor vessel 20, 120 can be formed of any suitable material for use in the reaction provided it can withstand the temperature and/or pressure at which decomposition of the decomposable moiety occurs. For instance, the reactor vessel should be able to withstand temperatures up to about 250°C where heat is the energy used to decompose the decomposable moiety. Although many materials are anticipated as being suitable, including metals, plastics, ceramics and materials such as graphite, preferably reactor vessels 20, 120 are formed of a transparent material to provide for observation of the reaction as it is proceeding. Thus, reactor vessel 20, 120 is preferably formed of quartz or a glass such as Pyrex^{®} brand material available from Corning, Inc. of Coming, New York.

In the practice of the invention, either a flow of an inert gas such as argon or nitrogen or a vacuum is drawn on reactor vessel 20, 120 and a stream of decomposable moieties is fed into reactor vessel 20, 120 via feeders 40a, 40b, 140a, 140b, 140c. The decomposable moieties can be any metal containing moiety such as an organometallic compound, a complex or a coordination compound, which can be decomposed by energy at the desired decomposition conditions of pressure and temperature. For instance, if heat is the source of energy the decomposable moiety should be subject to decomposition and production of nano-scale metal particles at temperatures no greater than 250°C, more preferably no greater than 200°C. Other materials, such as oxygen, can also be fed into reactor 20, 120 to partially oxidize the nano-scale metal particles produced by decomposition of the decomposable moiety, to protect the nano-scale particles from degradation. Contrariwise, a reducing material such as hydrogen can be fed into reactor 20, 120 to reduce oxidation and facilitate the decomposition of the decomposable moiety.

The energy for decomposition of the decomposable moiety is then provided to the decomposable moiety within reactor vessel 20, 120 by, for instance, heat lamp 50, 150. If desired, reactor vessel 120 can also be cooled by cooling coils 52, 152 to avoid deposit of nano-scale metal particles on the surface of reactor vessel 20, 120 as opposed to support 30, 130. Nano- scale metal particles produced by the decomposition of the decomposable moieties are then deposited on support 30, 130 or, in a cyclonic or centrifugal or other type collector (not shown), for storage and/or use.

Thus the present invention provides a facile means for producing nano-scale metal particles which permits selective placement of the particles, direct deposit of the particles on the end use substrate, without the need for extremes of temperature and pressure required by prior art processes.

The invention thus being described, it will be apparent that it can be varied in many ways. Such variations are not to be regarded as a departure from the scope of the present invention and all such modifications as would be apparent to one skilled in the art are intended to be included within the scope of the following claims.

## Claims

1. A process for producing nano-scale metal particles having an average diameter no greater than 1,000 nm, comprising:
a) continuously feeding through a plurality of feeders (40, 40a, 40b, 22, 122) at least one decomposable moiety selected from the group consisting of organometallic compounds, metal complexes, metal coordination compounds and mixtures thereof into a reactor vessel (20, 120);
b) exposing the decomposable moiety to a source of energy sufficient to decompose the moiety and produce nano-scale metal particles; and
c) depositing the nano-scale metal particles on a support (30, 130) disposed external to the reactor vessel (20, 120) or collecting the nano-scale metal particles by a collector disposed external to the reactor vessel (20, 120).

2. The process of claim 1, wherein the temperature within the reactor vessel (20, 120) is no greater than 250°C.

3. The process of claim 1 or claim 2, wherein a vacuum is maintained within the reactor vessel (20, 120) of no less than 1.33 hPa (1 mm).

4. The process of claim 1 or claim 2, wherein a pressure of no greater than about 2666 hPa (2000 mm) is maintained within the reactor vessel (20, 120).

5. The process of any one of the preceding claims, wherein the reactor vessel (20, 120) is formed of a material, which is transparent to the energy supplied by the source of energy employed to decompose the decomposable moiety.

6. The process of any one of the preceding claims, wherein the source of energy comprises a source of heat.

7. The process of any one of the preceding claims, wherein the nano-scale metal particles are deposited on a support (30, 130).

8. The process of any one of the preceding claims, wherein the support (30, 130) has incorporated therein a resistance heater.

9. The process of any one of the preceding claims, wherein the source of energy comprises a heat lamp (50, 150).

10. The process of any one of the preceding claims, which further comprises cooling the reactor vessel (20, 120).

11. The process of any one of the preceding claims, wherein the support (30, 130) is the end use substrate for the nano-scale metal particles.

12. The process of any one of the preceding claims, wherein the support (30, 130) comprises a component of an automotive catalytic converter.

13. The process of any one of the preceding claims, wherein the collector is a cyclonic collector.

14. The process of any one of the preceding claims, wherein oxygen is fed into the reactor vessel (20, 120) to partially oxidize the nano-scale metal particles produced by decomposition of the decomposable moiety.

15. The process of any one of the preceding claims, wherein a reducing material is fed into the reactor vessel (20, 120) to reduce the potential for oxidation of the decomposable moiety.

16. An apparatus (10, 100) for producing nano-scale metal particles having an average diameter no greater than 1,000 nm, comprising:
a) a reactor vessel (20, 120), which comprises a conduit;
b) a plurality of feeders (40, 40a, 40b, 22,122) in operational connection with the reactor vessel (20, 120) for feeding into the reactor vessel (20, 120) a decomposable moiety, which is selected from the group consisting of organometallic compounds, metal complexes, metal coordination compounds and mixtures thereof;
c) a support (30, 130) disposed external to the reactor vessel (20, 120) or a collector disposed external to the reactor vessel (20, 120) for collecting nano-scale metal particles produced in the reactor vessel (20, 120);
d) a source of energy capable of decomposing the decomposable moieties, wherein the source of energy acts on the decomposable moieties such that they decompose and nano-scale metal particles are deposited on the support (30, 130) or collected by the collector.

17. The apparatus (10, 100) of claim 16, wherein the temperature within the reactor vessel (20, 120) is no greater than 250°C.

18. The apparatus (10, 100) of claim 16 or claim 17, wherein a vacuum is maintained within the reactor vessel (20, 120) of no less than 1.33 hPa (1 mm).

19. The apparatus (10, 100) of claim 16 or claim 17, wherein a pressure of no greater than 2666 hPa (2000 mm) is maintained within the reactor vessel (20, 120).

20. The apparatus (10, 100) of any one of the claims 16 to 19, wherein the reactor vessel (20, 120) is formed of a material, which is transparent to the energy supplied by the source of energy employed to decompose the decomposable moiety.

21. The apparatus (10, 100) of any one of the claims 16 to 20, wherein the source of energy comprises a source of heat.

22. The apparatus (10, 100) of any one of the claims 16 to 21, wherein the collector has incorporated therein a resistance heater.

23. The apparatus (10, 100) of any one of the claims 16 to 22, wherein the source of energy comprises a heat lamp (50, 150).

24. The apparatus (10, 100) of any one of the claims 16 to 23, wherein cooling coils (52, 152) are disposed about the reactor vessel (20, 120) to cool the vessel (20, 120).

25. The apparatus (10, 100) of any one of the claims 16 to 24, wherein the support (30, 130) is the end use substrate for the nano-scale metal particles produced within the reactor vessel (20, 120).

26. The apparatus (10, 100) of any one of the claims 16 to 25, wherein the support (30, 130) comprises a component of an automotive catalytic converter.

27. The apparatus of any one of the claims 16 to 26, wherein the collector is a cyclonic collector.

## Patentansprüche

1. Ein Verfahren zur Herstellung von Metallteilchen im Nanobereich mit einem mittleren Durchmesser von nicht größer als 1.000 nm, welches umfasst:
a) kontinuierliches Zuführen mittels einer Vielzahl von Zufuhrvorrichtungen (40, 40a, 40b, 22,122) in einen Reaktorbehälter (20, 120) von zumindest einer zersetzbaren Einheit, ausgewählt aus der Gruppe, bestehend aus Organometallverbindungen, Metallkomplexen, Metallkoordinationsverbindungen und Mischungen hiervon;
b) Aussetzen der zersetzbaren Einheit an eine Energiequelle, die ausreicht, um die Einheit zu zersetzen und Metallteilchen im Nanobereich herzustellen; und
c) Abscheiden der Metallteilchen im Nanobereich auf einem außerhalb des Reaktorbehälters (20, 120) angeordneten Aufnehmer (30, 130) oder
Sammeln der Metallteilchen im Nanobereich durch einen außerhalb des Reaktorbehälters (20, 120) angeordneten Sammler.

2. Das Verfahren nach Anspruch 1,
worin die Temperatur innerhalb des Reaktorbehälters (20, 120) nicht höher ist als 250 °C.

3. Das Verfahren nach Anspruch 1 oder Anspruch 2,
worin ein Vakuum von nicht weniger als 1,33 hPa (1 mm) innerhalb des Reaktorbehälters (20,120) aufrechterhalten wird.

4. Das Verfahren nach Anspruch 1 oder Anspruch 2,
worin ein Druck von nicht höher als ungefähr 2.666 hPa (2.000 mm) innerhalb des Reaktorbehälters (20, 120) aufrechterhalten wird.

5. Das Verfahren nach irgendeinem der vorhergehenden Ansprüche,
worin der Reaktorbehälter (20, 120) aus einem Material gebildet ist, welches transparent für die Energie ist, die durch die Energiequelle geliefert wird, die angewandt wird, um die zersetzbare Einheit zu zersetzen.

6. Das Verfahren nach irgendeinem der vorhergehenden Ansprüche,
worin die Energiequelle eine Wärmequelle umfasst.

7. Das Verfahren nach irgendeinem der vorhergehenden Ansprüche,
worin die Metallteilchen im Nanobereich auf einem Aufnehmer (30, 130) abgeschieden werden.

8. Das Verfahren nach irgendeinem der vorhergehenden Ansprüche,
worin der Aufnehmer (30, 130) eine darin eingebaute Widerstandsheizung hat.

9. Das Verfahren nach irgendeinem der vorhergehenden Ansprüche,
worin die Energiequelle eine Heizlampe (50, 150) umfasst.

10. Das Verfahren nach irgendeinem der vorhergehenden Ansprüche,
welches weiterhin Kühlen des Reaktorbehälters (20, 120) umfasst.

11. Das Verfahren nach irgendeinem der vorhergehenden Ansprüche,
worin der Aufnehmer (30, 130) der Endanwendungsmaterialträger für die Metallteilchen im Nanobereich ist.

12. Das Verfahren nach irgendeinem der vorhergehenden Ansprüche,
worin der Aufnehmer (30, 130) eine Komponente eines Fahrzeug-Katalysators umfasst.

13. Das Verfahren nach irgendeinem der vorhergehenden Ansprüche,
worin der Sammler ein zyklonischer Sammler ist.

14. Das Verfahren nach irgendeinem der vorhergehenden Ansprüche,
worin Sauerstoff dem Reaktorbehälter (20, 120) zugeführt wird, um die Metallteilchen im Nanobereich, die durch Zersetzung der zersetzbaren Einheit hergestellt werden, partiell zu oxidieren.

15. Das Verfahren nach irgendeinem der vorhergehenden Ansprüche,
worin ein Reduktionsmittel dem Reaktorbehälter (20, 120) zugeführt wird, um das Potential der Oxidation der zersetzbaren Einheit zu verringern.

16. Eine Vorrichtung (10, 100) zur Herstellung von Metallteilchen im Nanobereich mit einem mittleren Durchmesser von nicht größer als 1.000 nm, welche umfasst:
a) einen Reaktorbehälter (20, 120), welcher ein Rohr aufweist;
b) eine Vielzahl von Zufuhrvorrichtungen (40, 40a, 40b, 22,122) in Wirkverbindung mit dem Reaktorbehälter (20, 120), um eine zersetzbare Einheit, welche ausgewählt wird aus der Gruppe, bestehend aus Organometallverbindungen, Metallkomplexen, Metallkoordinationsverbindungen und Mischungen hiervon, dem Reaktorbehälter (20, 120) zuzuführen;
c) einen außerhalb des Reaktorbehälters (20, 120) angeordneten Aufnehmer (30, 130) oder einen Sammler für das Sammeln der in dem Reaktorbehälter (20, 120) hergestellten Metallteilchen im Nanobereich, der außerhalb des Reaktorbehälters (20, 120) angeordnet ist;
d) eine zur Zersetzung der zersetzbaren Einheiten geeignete Energiequelle,
wobei die Energiequelle auf die zersetzbaren Einheiten derart einwirkt, dass sie sich zersetzen und Metallteilchen im Nanobereich auf dem Aufnehmer (30, 130) abgeschieden werden oder durch den Sammler gesammelt werden.

17. Die Vorrichtung (10, 100) nach Anspruch 16,
worin die Temperatur innerhalb des Reaktorbehälters (20, 120) nicht höher als 250 °C ist.

18. Die Vorrichtung (10, 100) nach Anspruch 16 oder Anspruch 17,
worin ein Vakuum von nicht weniger als 1,33 hPa (1 mm) innerhalb des Reaktorbehälters (20,120) aufrechterhalten wird.

19. Die Vorrichtung (10, 100) nach Anspruch 16 oder Anspruch 17,
worin ein Druck von nicht höher als 2.666 hPa (2.000 mm) innerhalb des Reaktorbehälters (20, 120) aufrechterhalten wird.

20. Die Vorrichtung (10, 100) nach irgendeinem der Ansprüche 16 bis 19,
worin der Reaktorbehälter (20, 120) aus einem Material gebildet ist, welches transparent für die Energie ist, die durch die Energiequelle geliefert wird, die angewandt wird, um die zersetzbare Einheit zu zersetzen.

21. Die Vorrichtung (10, 100) nach irgendeinem der Ansprüche 16 bis 20,
worin die Energiequelle eine Wärmequelle umfasst.

22. Die Vorrichtung (10, 100) nach irgendeinem der Ansprüche 16 bis 21,
worin der Sammler eine darin eingebaute Widerstandsheizung hat.

23. Die Vorrichtung (10, 100) nach irgendeinem der Ansprüche 16 bis 22,
worin die Energiequelle eine Heizlampe (50, 150) umfasst.

24. Die Vorrichtung (10, 100) nach irgendeinem der Ansprüche 16 bis 23,
worin Kühlspiralen (52, 152) um den Reaktorbehälter (20, 120) zur Kühlung des Behälters (20, 120) angeordnet sind.

25. Die Vorrichtung (10, 100) nach irgendeinem der Ansprüche 16 bis 24,
worin der Aufnehmer (30, 130) der Endanwendungsmaterialträger für die in dem Reaktorbehälter (20, 120) hergestellten Metallteilchen im Nanobereich ist.

26. Die Vorrichtung (10, 100) nach irgendeinem der Ansprüche 16 bis 25,
worin der Aufnehmer (30, 130) eine Komponente eines Fahrzeug-Katalysators umfasst.

27. Die Vorrichtung (10, 100) nach irgendeinem der Ansprüche 16 bis 26,
worin der Sammler ein zyklonischer Sammler ist.

## Revendications

1. Processus pour produire des nanoparticules métalliques ayant un diamètre moyen qui n'est pas supérieur à 1000 nm comprenant :
a) l'alimentation en continu par une pluralité d'alimentateurs (40, 40a, 40b, 22, 122) d'au moins une moitié décomposable sélectionnée dans le groupe comprenant des composants organométalliques, des complexes métalliques, des composés métalliques de coordination et des mélanges de ceux-ci dans une cuve de réacteur (20, 120) ;
b) l'exposition de la moitié décomposable à une source d'énergie suffisante pour décomposer la moitié et pour produire des nanoparticules métalliques et
c) le dépôt des nanoparticules métalliques sur un support (30, 130) disposé à l'extérieur de la cuve de réacteur (20, 120) ou la collecte des nanoparticules métalliques par un collecteur disposé à l'extérieur de la cuve de réacteur (20, 120).

2. Processus selon la revendication 1 dans lequel la température à l'intérieur de la cuve du réacteur (20, 120) n'est pas supérieure à 250 °C.

3. Processus selon la revendication 1 ou la revendication 2 dans lequel un vide qui n'est pas inférieur à 1,33 hPa (1 mm) est maintenu à l'intérieur de la cuve de réacteur (20, 120).

4. Processus selon la revendication 1 ou la revendication 2 dans lequel une pression qui n'est pas supérieure à environ 2666 hPa (2000 mm) est maintenue à l'intérieur de la cuve de réacteur (20, 120).

5. Processus selon l'une quelconque des revendications précédentes dans lequel la cuve de réacteur (20, 120) est formée en un matériau qui est transparent à l'énergie fournie par la source d'énergie employée pour décomposer la moitié décomposable.

6. Processus selon l'une quelconque des revendications précédentes dans lequel la source d'énergie comprend une source de chaleur.

7. Processus selon l'une quelconque des revendications précédentes dans lequel les nanoparticules métalliques sont déposées sur un support (30, 130).

8. Processus selon l'une quelconque des revendications précédentes dans lequel le support (30, 130) a un chauffage par résistance qui y est incorporé.

9. Processus selon l'une quelconque des revendications précédentes dans lequel la source d'énergie comprend une lampe chauffante (50, 150).

10. Processus selon l'une quelconque des revendications précédentes qui comprend de plus refroidir de la cuve de réacteur (20, 120).

11. Processus selon l'une quelconque des revendications précédentes dans lequel le support (30, 130) est le substrat d'utilisation finale pour les nanoparticules métalliques.

12. Processus selon l'une quelconque des revendications précédentes dans lequel le support (30, 130) comprend un composant d'un convertisseur catalytique automobile.

13. Processus selon l'une quelconque des revendications précédentes dans lequel le collecteur est un collecteur cyclonique.

14. Processus selon l'une quelconque des revendications précédentes dans lequel d'oxygène est alimenté dans la cuve de réacteur (20, 120) pour oxyder partiellement les nanoparticules métalliques produites par décomposition de la moitié décomposable.

15. Processus selon l'une quelconque des revendications précédentes dans lequel un matériau réducteur est alimenté dans la cuve de réacteur (20, 120) pour réduire le potentiel d'oxydation de la moitié décomposable.

16. Appareil (10, 100) pour produire des nanoparticules métalliques ayant un diamètre moyen qui n'est pas supérieur à 1000 nm comprenant :
a) une cuve de réacteur (20, 120) qui comprend un conduit ;
b) une pluralité d'alimentateurs (40, 40a, 40b, 22, 122) en liaison opérationnelle avec la cuve de réacteur (20, 120) pour alimenter une moitié décomposable dans la cuve de réacteur (20, 120), la moitié décomposable sélectionnée dans le groupe comprenant des composants organométalliques, des complexes métalliques, des composés métalliques de coordination et des mélanges de ceux-ci ;
c) un support (30, 130) disposé à l'extérieur de la cuve de réacteur (20, 120) ou un collecteur disposé à l'extérieur de la cuve de réacteur (20, 120) pour collecter les nanoparticules métalliques produites dans la cuve de réacteur (20, 120) ;
d) une source d'énergie capable de décomposer les moitiés décomposables, la source d'énergie agissant sur les moitiés décomposables de telle manière qu'elles se décomposent et que les nanoparticules métalliques se déposent sur le support (30, 130) ou soient collectées par le collecteur.

17. Appareil (10, 100) selon la revendication 16 dans lequel la température à l'intérieur de la cuve de réacteur (20, 120) n'est pas supérieure à 250 °C.

18. Appareil (10, 100) selon la revendication 16 ou la revendication 17 dans lequel un vide qui n'est pas inférieur à 1,33 hPa (1 mm) est maintenu à l'intérieur de la cuve de réacteur (20, 120).

19. Appareil (10, 100) selon la revendication 16 ou la revendication 17 dans lequel une pression qui n'est pas supérieure à environ 2666 hPa (2000 mm) est maintenue à l'intérieur de la cuve de réacteur (20, 120).

20. Appareil (10, 100) selon l'une quelconque des revendications 16 à 19 dans lequel la cuve de réacteur (20, 120) est formée en un matériau qui est transparent à l'énergie fournie par la source d'énergie employée pour décomposer la moitié décomposable.

21. Appareil (10, 100) selon l'une quelconque des revendications 16 à 20 dans lequel la source d'énergie comprend une source de chaleur.

22. Appareil (10, 100) selon l'une quelconque des revendications 16 à 21 dans lequel le collecteur a un chauffage par résistance qui y est incorporé.

23. Appareil (10, 100) selon l'une quelconque des revendications 16 à 22 dans lequel la source d'énergie comprend une lampe chauffante (50, 150).

24. Appareil (10, 100) selon l'une quelconque des revendications 16 à 23 dans lequel des serpentins de refroidissement (52, 152) sont disposées autour de la cuve de réacteur (20, 120) pour refroidir la cuve (20, 120).

25. Appareil (10, 100) selon l'une quelconque des revendications 16 à 24 dans lequel le support (30, 130) est le substrat d'utilisation finale pour les nanoparticules métalliques produites à l'intérieur de la cuve de réacteur (20, 120).

26. Appareil (10, 100) selon l'une quelconque des revendications 16 à 25 dans lequel le support (30, 130) comprend un composant d'un convertisseur catalytique automobile.

27. Appareil (10, 100) selon l'une quelconque des revendications 16 à 26 dans lequel le collecteur est un collecteur cyclonique.
